# EUROPEAN PATENT APPLICATION

(11) **EP 4 174 606 A1**
(43) Date of publication of application: **03.05.2023**
(21) Application number: 22192116.6
(22) Date of filing: 25.08.2022
(51) Int. Cl.: G05D 1/00

(54) **MOBILE BODY MANAGEMENT DEVICE, MOBILE BODY MANAGEMENT METHOD, MOBILE BODY MANAGEMENT COMPUTER PROGRAM PRODUCT, AND MOBILE BODY MANAGEMENT SYSTEM**

(30) Priority: 27.10.2021 JP 2021175493
(71) Applicant: KABUSHIKI KAISHA TOSHIBA, Minato-ku Tokyo 105-0023 (JP)
(72) Inventor: HIRAYAMA, Noriyuki, Minato-ku, Tokyo, 105-0023 (JP); KURATATE, Takaaki, Minato-ku, Tokyo, 105-0023 (JP); MORIYA, Akihisa, Minato-ku, Tokyo, 105-0023 (JP)
(74) Representative: Hoffmann Eitle

(57) **Abstract**

A first setting unit (20C) sets first waypoints, which are essential route points of a mobile body (40), in a virtual space where a virtual model is arranged. A second setting unit (20D, 21D) sets one or more second waypoints around the first waypoint. A local patrol route generation unit (20E, 21E) generates, for each first waypoint, a local patrol route that passes through the first waypoints and the second waypoints around the first waypoint. A global patrol route generation unit (20F) sets one or more third waypoints at positions separated by a predetermined distance from a surface of the virtual model and generates a global patrol route that passes through a third waypoint. A patrol route generation unit (20G) generates a patrol route in which the local patrol route inserted into the global patrol route.

## Description

### FIELD

Arrangements described herein relate generally to a mobile body management device, a mobile body management method, a mobile body management computer program product, and a mobile body management system.

### BACKGROUND

A system has been known that generates a patrol route for a mobile body to patrol. For example, a plurality of waypoints are set, and a patrol route that sequentially passes through the waypoints is generated.

However, in the related art, a plurality of waypoints are uniformly set in a space to be patrolled according to a target, and a patrol route for simply patrolling the waypoints is generated. As such, the related art has not provided a mobile patrol route according to the importance of an inspection point.

### BRIEF DESCRIPTION OF THE DRAWINGS

FIG. 1 is a schematic diagram of a mobile body management system of an arrangement;
FIG. 2A is an explanatory diagram of a virtual model;
FIG. 2B is an explanatory diagram of a first waypoint;
FIG. 2C is an explanatory diagram of a second waypoint;
FIG. 2D is a schematic diagram of a data structure of a local patrol route;
FIG. 3A is an explanatory diagram of a global patrol route;
FIG. 3B is a schematic diagram of a data structure of a global patrol route;
FIG. 4A is an explanatory diagram of a patrol route;
FIG. 4B is a schematic diagram of a data structure of a patrol route;
FIG. 5 is an explanatory diagram of the generation of a global patrol route and a patrol route;
FIG. 6 is an explanatory diagram of the generation of a global patrol route and a patrol route;
FIG. 7 is a flowchart of the flow of information processing;
FIG. 8 is a flowchart of the flow of a patrol route generation process;
FIG. 9A is an explanatory diagram of a patrol route;
FIG. 9B is an explanatory diagram of a patrol route; and
FIG. 10 is a hardware configuration diagram.

### DETAILED DESCRIPTION

The problem to be solved by the arrangements herein is to provide a mobile body management device, a mobile body management method, a mobile body management computer program product, and a mobile body management system, capable of providing a mobile patrol route according to the importance of an inspection point.

A mobile body management device, a mobile body management method, a mobile body management computer program product, and a mobile body management system are described below in detail with reference to the accompanying drawings.

### First Arrangement

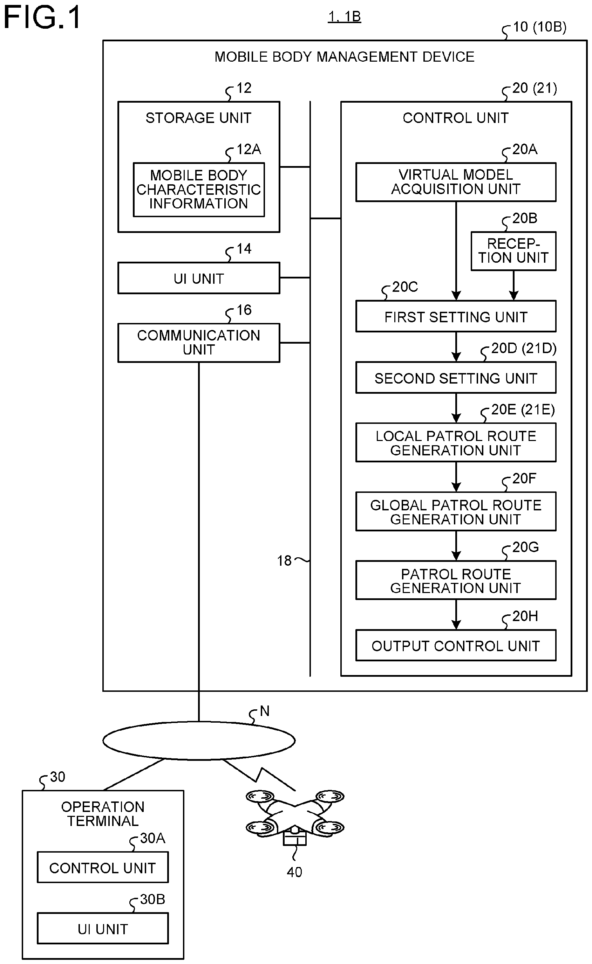

FIG. 1 is a schematic diagram of an example of a mobile body management system 1 of the present arrangement.

The mobile body management system 1 includes a mobile body management device 10, an operation terminal 30, and a mobile body 40. The mobile body management device 10, the operation terminal 30, and the mobile body 40 are communicatively connected to one another via a network N or the like. The mobile body management device 10, the operation terminal 30, and the mobile body 40 may also directly communicate to one another without the intervention of the network N.

The mobile body management device 10 is an information processing device that calculates a patrol route of the mobile body 40.

The mobile body 40 is a movable object that moves along the patrol route generated by the mobile body management device 10. The mobile body 40 is, for example, a flying object, a ship, a vehicle, a robot, or the like. The flying object is, for example, a drone, an airplane, or the like. The vehicle is, for example, a four-wheeled automobile, a two-wheeled automobile, or the like. The mobile body 40 may have a configuration in which the position of a main body is fixed and a part of a mechanism provided in the main body moves. For example, the mobile body 40 may be a robot arm. The mobile body 40 may be either a mobile body that moves via a human driving operation or a mobile body that can autonomously move without a human driving operation. An autonomously mobile aircraft includes, for example, a drone, an unmanned aerial vehicle (UAV), or the like.

In the present arrangement, an example in which the mobile body 40 is a drone is described.

Furthermore, in the present arrangement, an example in which the mobile body 40 is provided with various sensors is described. The sensor is only required to be a known sensor capable of observing at least one of the outside and the inside of the mobile body 40. Specific examples of the sensor include a photographing device that acquires image data by photography, a temperature sensor, a humidity sensor, a position sensor, an odor sensor, a microphone, and the like, but are not limited thereto. In the present arrangement, an example in which at least a photographing device is mounted on the mobile body 40 is described. The photographing device is only required to be any photographing device capable of photographing at least one of a moving image and a still image.

The operation terminal 30 is an information processing device operated by a user. The operation terminal 30 is, for example, a mobile terminal, a smartphone, a tablet terminal, and the like, but is not limited thereto.

The operation terminal 30 includes a control unit 30A and a user interface (UI) unit 30B. The control unit 30A performs information processing on the operation terminal 30. The UI unit 30B has a display function of displaying various information and an input function of receiving an operation instruction by the user. The display function is implemented by, for example, a display and the like. The input function is implemented by, for example, a pointing device such as a mouse and a touch pad, a keyboard, and the like. The UI unit 30B may be a touch panel in which the display function and the input function are integrally configured.

The mobile body management device 10 is an information processing device that generates a patrol route for the mobile body 40.

The mobile body management device 10 includes a storage unit 12, a UI unit 14, a communication unit 16, and a control unit 20. The storage unit 12, the UI unit 14, the communication unit 16, and the control unit 20 are communicably connected to one another via a bus 18 or the like.

The storage unit 12 and the UI unit 14 are only required to be communicably connected to the control unit 20 by wire or wirelessly. At least one of the storage unit 12 and the UI unit 14 may be connected to the control unit 20 via the network N.

Furthermore, at least one of one or a plurality of functional units included in the storage unit 12, the UI unit 14, and the control unit 20 may be mounted on an external information processing device communicably connected to the mobile body management device 10 via the network N or the like.

The storage unit 12 stores various data. In the present arrangement, the storage unit 12 stores mobile body characteristic information 12A in advance.

The mobile body characteristic information 12A is information representing the characteristics of the mobile body 40. The mobile body characteristic information 12A is information including at least one of a maximum movable distance of the mobile body 40, the movement accuracy of the mobile body 40, the presence or absence of obstacle avoidance ability of the mobile body 40, and the size of the mobile body 40.

The UI unit 14 has a display function of displaying various information and an input function of receiving an operation instruction by the user. The display function and the input function are the same as described above.

The communication unit 16 is a communication interface for communicating with the operation terminal 30, the mobile body 40, and an information processing device outside the mobile body management device 10.

For example, the communication unit 16 communicates with the operation terminal 30 by a wired network such as Ethernet (registered trademark) or a wireless network such as wireless fidelity (Wi-Fi). Furthermore, the communication unit 16 communicates with the mobile body 40 by a wireless network such as Wi-Fi or Bluetooth (registered trademark).

The control unit 20 performs information processing on the mobile body management device 10. The control unit 20 includes a virtual model acquisition unit 20A, a reception unit 20B, a first setting unit 20C, a second setting unit 20D, a local patrol route generation unit 20E, a global patrol route generation unit 20F, a patrol route generation unit 20G, and an output control unit 20H.

The virtual model acquisition unit 20A, the reception unit 20B, the first setting unit 20C, the second setting unit 20D, the local patrol route generation unit 20E, the global patrol route generation unit 20F, the patrol route generation unit 20G, and the output control unit 20H are implemented by, for example, one or a plurality of processors. For example, each of the above units may be implemented by executing a computer program on a processor such as a central processing unit (CPU), that is, by software. Each of the above units may also be implemented by a processor such as a dedicated IC, that is, hardware. Each of the above units may also be implemented using software and hardware in combination. When a plurality of processors are used, each processor may implement one of the units or may also implement two or more of the units.

The virtual model acquisition unit 20A acquires a virtual model of a facility to be patrolled by the mobile body 40.

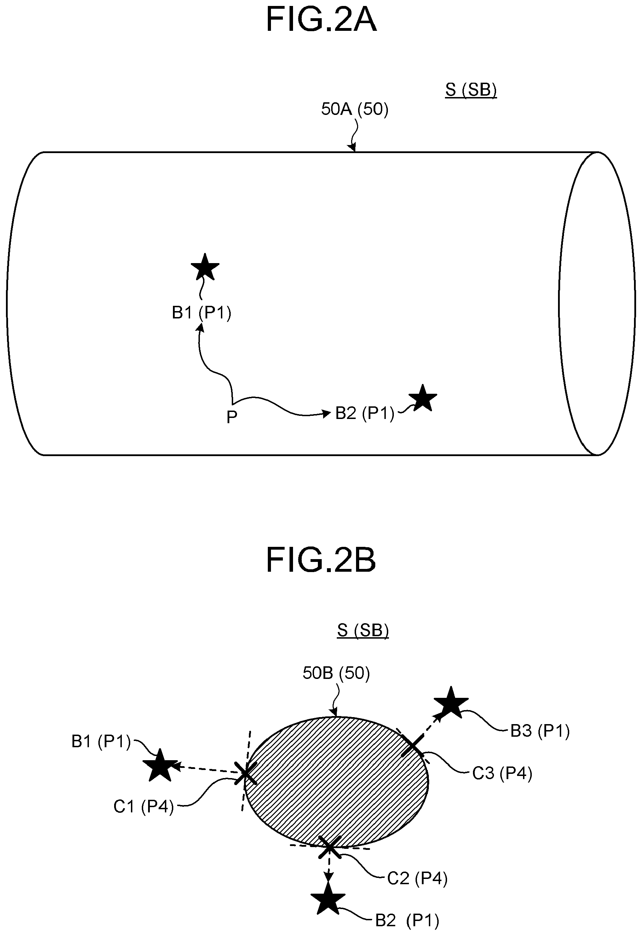

FIG. 2A is an explanatory diagram of an example of a virtual model 50A. The virtual model 50A is an example of a virtual model 50.

The virtual model 50 is a model obtained by modeling the facility to be patrolled.

The facility to be patrolled is a facility to be patrolled by the mobile body 40. The facility to be patrolled is, for example, a facility to be inspected by patrol of the mobile body 40. The shape and size of the facility to be patrolled are not limited. The facility to be patrolled is, for example, a facility having a cylindrical shape, a spherical shape, a polygonal shape, or the like. FIG. 2A illustrates an example in which the facility to be patrolled is a facility having a tubular shape, specifically, a tunnel. That is, FIG. 2A illustrates an example of a virtual model 50A of a tunnel serving as a facility to be patrolled.

The virtual model 50 represents three-dimensional information of the facility to be patrolled in a real space. The virtual model 50 is represented by, for example, a three dimensions (3D)-computer aided design (CAD), a 3D point cloud, or the like. The 3D point cloud represents, for example, three-dimensional position coordinates of each of points that are regions obtained by dividing the surface of the facility to be patrolled into a plurality of regions.

The description is continued by referring now back to FIG. 1. The virtual model acquisition unit 20A acquires the virtual model 50 from the operation terminal 30, for example.

The user who operates the operation terminal 30, for example, selects a desired virtual model 50 from a plurality of virtual models 50 stored in the operation terminal 30, thereby selecting a virtual model 50 of a facility to be patrolled existing in a target space to be patrolled by the mobile body 40. The control unit 30A of the operation terminal 30 transmits the virtual model 50 selected by an operation instruction on the UI unit 30B by the user to the mobile body management device 10 as the virtual model 50 of the facility to be patrolled. The reception unit 20B of the mobile body management device 10 receives operation input by the user. For example, the reception unit 20B receives operation input by the user of the operation terminal 30. The virtual model acquisition unit 20A acquires the virtual model 50 from the operation terminal 30 via the reception unit 20B.

The control unit 30A of the operation terminal 30 may generate the virtual model 50 in response to an operation instruction or the like on the UI unit 30B by the user, and transmit the virtual model 50 to the mobile body management device 10. Furthermore, the storage unit 12 of the mobile body management device 10 may store a plurality of virtual models 50 in advance. Then, the virtual model acquisition unit 20A may acquire, as the virtual model 50 of the facility to be patrolled, a virtual model 50 selected by an operation instruction on the UI unit 30B or the UI unit 14 by the user among the virtual models 50 stored in the storage unit 12.

The first setting unit 20C sets first waypoints.

This is described with reference to FIG. 2A. First waypoints P1 are essential route points of the mobile body 40. The first waypoint P1 is an example of a waypoint P that is a route point of the mobile body 40. Specifically, the first waypoint P1 is an essential route point P that the mobile body 40 always passes through and is a waypoint P existing at an important location. The important location is at least one of a point or an area where the mobile body 40 stays for a predetermined time or longer, and a point where the mobile body 40 is located when performing a predetermined process on a facility to be patrolled, in a real space SB. The predetermined process for the facility to be patrolled is, for example, a process related to inspection of the facility to be patrolled. Specifically, the predetermined process for the facility to be patrolled is at least one of photography, sound collection, or observation of the facility to be patrolled by the photographing device mounted on the mobile body 40. The observation includes sensing of odor, temperature, humidity, sound, or the like.

The first setting unit 20C sets one or more first waypoints P1 in a virtual space S where the virtual model 50 acquired by the virtual model acquisition unit 20A is arranged. The virtual space S is a three-dimensional space corresponding to the real space SB, and is a space represented by virtualizing the real space SB including the facility to be patrolled. The scale of the virtual space S is assumed to be the same as that of the real space. FIG. 2A illustrates an example of a scene in which two waypoints P respectively represented by a waypoint B1 and a waypoint B2 are set as the first waypoints P1. Specifically, FIG. 2A illustrates an example of a scene in which two first waypoints P1 are set in a tunnel that is an example of the facility to be patrolled represented by the virtual model 50A.

The first setting unit 20C is only required to set one or more first waypoints P1, and is not limited to a mode in which a plurality of first waypoints P1 are set. In the present arrangement, a mode in which the first setting unit 20C sets the first waypoints P1 is described as an example.

The first setting unit 20C sets the first waypoints P1 acquired from the operation terminal 30 in the virtual space S.

For example, the control unit 30A of the operation terminal 30 displays, on the UI unit 30B, the virtual model 50 selected as the facility to be patrolled by the operation instruction on the UI unit 30B by the user. By operating the UI unit 30B while visually recognizing the displayed virtual model 50, the user sets the first waypoint P1 at each of a plurality of important locations where the mobile body 40 is located when performing a process such as inspection at a desired position in the virtual space S including the virtual model 50. Then, the control unit 30A of the operation terminal 30 transmits the first waypoints P1 set by the user to the mobile body management device 10. The first setting unit 20C of the mobile body management device 10 receives the first waypoints P1 from the operation terminal 30 via the reception unit 20B and sets the first waypoints P1 in the virtual space S.

The first setting unit 20C may set the first waypoints P1 at positions separated by a predetermined distance in a direction away from the surface of the virtual model 50 with reference to a reference point on the surface of the virtual model 50 received by the reception unit 20B.

FIG. 2B is an explanatory diagram of another example of setting the first waypoints P1. FIG. 2B illustrates an example of a virtual model 50B having a dome shape. The virtual model 50B is an example of the virtual model 50.

For example, the control unit 30A of the operation terminal 30 displays, on the UI unit 30B, the virtual model 50B selected by an operation instruction on the UI unit 30B by the user. By operating the UI unit 30B while visually recognizing the displayed virtual model 50B, the user sets reference points P4 at desired positions on a surface of the virtual model 50B of a facility to be patrolled. The reference point P4 is only required to be any position on the surface of the virtual model 50. FIG. 2B illustrates an example of a scene in which a plurality of reference points P4 are set for a point C1 to a point C3, respectively.

In this case, the control unit 30A of the operation terminal 30 transmits the reference points P4 set by the user to the mobile body management device 10. The first setting unit 20C of the mobile body management device 10 receives the reference points P4 from the operation terminal 30 via the reception unit 20B.

Upon receiving the reference points P4, the first setting unit 20C sets the first waypoints P1 at positions separated by a predetermined distance in a direction away from the surface of the virtual model 50B on the basis of the reference points P4 on the surface of the virtual model 50B. For example, the first setting unit 20C sets the first waypoint P1 at each of the positions separated by the predetermined distance along the normal line with respect to the surface of the virtual model 50B on the basis of each of the reference points P4. FIG. 2B illustrates an example of a scene in which three waypoints P respectively represented by a waypoint B1 to a waypoint B3 are set as the first waypoints P1 at the positions separated by the predetermined distance along the normal line from the reference points P4 that are the point C1 to the point C3 on the surface of the virtual model 50B.

The predetermined distance between the reference point P4 and the first waypoint P1 may be any distance desired by the user, or may be a distance according to the mobile body characteristic information 12A. When the distance between the surface of the virtual model 50 and the first waypoint P1, which is the predetermined distance between the reference point P4 and the first waypoint P1, is set to the distance according to the mobile body characteristic information 12A, the first setting unit 20C is only required to set the first waypoint P1 to the following predetermined distance.

Specifically, the first setting unit 20C reads information representing the size of the mobile body 40 and the movement accuracy of the mobile body 40 and included in the mobile body characteristic information 12A. Then, the first setting unit 20C is only required to use a value, which is obtained by adding a certain amount of margin to the sum of 1/2 of the size of the mobile body 40 and the movement accuracy, as the predetermined distance between the surface of the virtual model 50 and the first waypoint P1. By using the predetermined distance between the surface of the virtual model 50 and the first waypoint P1 as the value calculated by the above calculation according to the mobile body characteristic information 12A, the first setting unit 20C can install the first waypoints P1 at positions where the mobile body 40 can actually reach in the real space SB. That is, the first setting unit 20C can suppress that the first waypoints P1 are set at unreachable positions of the mobile body 40 due to constraints imposed by the mobile body characteristic information 12A, such as the size of the mobile body 40. Furthermore, the first setting unit 20C can set the first waypoints P1 at positions according to the mobile body characteristic information 12A of the mobile body 40.

The first setting unit 20C may set the reference point P4 at any position on the surface of the virtual model 50 included in the virtual space S by using a known image recognition process, and set the first waypoints P1 at positions separated by a predetermined distance from the reference point P4. Furthermore, the mobile body 40 may be manually moved in the real space, and a position in the virtual space corresponding to the current position estimated by a known position estimation process may be set as the first waypoint P1.

The description is continued by referring now back to FIG. 1. The second setting unit 20D sets one or more second waypoints around the first waypoint P1 in the virtual space S. In the present arrangement, a case where the second setting unit 20D sets a plurality of second waypoints for one first waypoint P1 is described as an example.

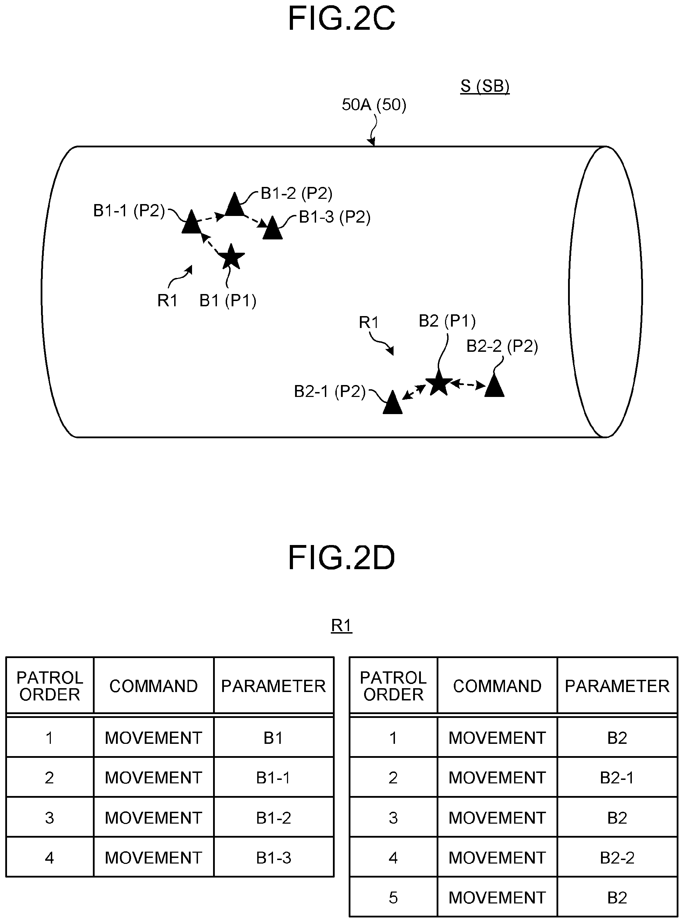

FIG. 2C is an explanatory diagram of an example of setting second waypoints P2. The second waypoint P2 is a waypoint P related to the first waypoint P1, and is a waypoint P in a secondary viewpoint for a facility to be patrolled.

The second setting unit 20D sets a plurality of second waypoints P2 at positions within a predetermined distance from the first waypoint P1. Specifically, the second setting unit 20D sets the second waypoints P2 in at least one of within a range of a predetermined distance from the first waypoints P1 in the virtual space S and on one or more concentric circles with the first waypoint P1 as a center.

A distance between the first waypoint P1 and the second waypoint P2 is only required to be a predetermined distance. The distance between the first waypoint P1 and the second waypoint P2 may be appropriately changed according to an operation instruction by the user, or the like.

It is preferable that the shortest distance between the second waypoint P2 set in the virtual space S and the surface of the virtual model 50 included in the virtual space S is a distance equal to or greater than the above-mentioned predetermined distance between the surface of the virtual model 50 and the first waypoint P1 according to the mobile body characteristic information 12A. That is, it is preferable that the second setting unit 20D adjusts the shortest distance between the second waypoint P2 and the surface of the virtual model 50 to a predetermined distance or more, which is the value obtained by adding a certain amount of margin to the sum of 1/2 of the size of the mobile body 40 and the movement accuracy, the predetermined distance being included in the mobile body characteristic information 12A. In this case, the second setting unit 20D can suppress that the second waypoints P2 are set at unreachable positions of the mobile body 40 due to constraints imposed by the mobile body characteristic information 12A, such as the size of the mobile body 40. Furthermore, the second setting unit 20D can set the second waypoints P2 at positions according to the mobile body characteristic information 12A.

The second setting unit 20D sets one or more second waypoints P2, which satisfy these conditions, for each of the first waypoints P1 set by the first setting unit 20C.

FIG. 2C illustrates an example of a scene in which second waypoints P2 being waypoints P respectively represented by a waypoint B1-1, a waypoint B1-2, and a waypoint B1-3 are set for the first waypoint P1 represented by the waypoint B1. Furthermore, FIG. 2C illustrates an example of a scene in which second waypoints P2 being waypoints P respectively represented by a waypoint B2-1 and a waypoint B2-2 are set for the first waypoint P1 represented by the waypoint B2.

As illustrated in FIG. 2C, the second waypoints P2 are set for each of the first waypoints P1 set by the first setting unit 20C.

The description is continued by referring now back to FIG. 1. The local patrol route generation unit 20E generates, for each first waypoint P1, a local patrol route that passes through the first waypoint P1 and the second waypoints P2 around the first waypoint P1.

This is described with reference to FIG. 2C. A local patrol route R1 is a route for locally patrolling an area around the first waypoint P1, the route being generated for each of the first waypoints P1.

In the present arrangement, the local patrol route generation unit 20E generates, for each first waypoint P1, a local patrol route R1 that sequentially passes through the first waypoint P1 and each of the second waypoints P2 around the first waypoint P1 one or more times.

That is, the local patrol route generation unit 20E generates, for each of the first waypoints P1, the local patrol route R1 that sequentially passes through one first waypoint P1 and each of one or more second waypoints P2 set for the first waypoint P1 one or more times.

A patrol order, which is a route order of the first waypoint P1 and the second waypoints P2 and is defined by the local patrol route R1, is only required to be any order according to a predetermined algorithm.

For example, the local patrol route generation unit 20E generates a local patrol route R1 starting from the first waypoint P1 and sequentially passes through the second waypoints P2 set for the first waypoint P1. Specifically, as illustrated in FIG. 2C, the local patrol route generation unit 20E generates the local patrol route R1 starting from the first waypoint P1 represented by the waypoint B1 and sequentially passes through the second waypoints P2 represented by the waypoint B1-1, the waypoint B1-2, and the waypoint B1-3.

Furthermore, for example, the local patrol route generation unit 20E generates a local patrol route R1 starting from the first waypoint P1 and returns to the first waypoint P1 each time the second waypoints P2 set for the first waypoint P1 are passed through one by one. Specifically, as illustrated in FIG. 2C, the local patrol route generation unit 20E generates the local patrol route R1 starting from the first waypoint P1 represented by the waypoint B2 and passes through the second waypoint P2 represented by the waypoint B2-1, the first waypoint P1 represented by the waypoint B2, the second waypoint P2 represented by the waypoint B2-2, and the first waypoint P1 represented by the waypoint B2 in this order.

FIG. 2D is a schematic diagram representing an example of a data structure of the local patrol route R1. For example, the local patrol route R1 is represented by data in which a patrol order, commands, and parameters are correlated with one another. The patrol order represents a route order of the waypoints P. The command represents the content of work or processing performed by the mobile body 40 at the waypoints P in a corresponding patrol order. The parameter is identification information of the waypoint P. When the local patrol route R1 illustrated in FIG. 2D is used, the mobile body 40 stores in advance a table in which the identification information of the waypoints P, three-dimensional position coordinates of the waypoints P, and the orientation of the mobile body 40 are correlated with one another. As the parameters included in the local patrol route R1, three-dimensional position information of the waypoints P and information representing the orientation of the mobile body 40 may be used instead of the identification information of the waypoints P. The parameter may further include other information.

The description is continued by referring now back to FIG. 1. The global patrol route generation unit 20F generates a global patrol route.

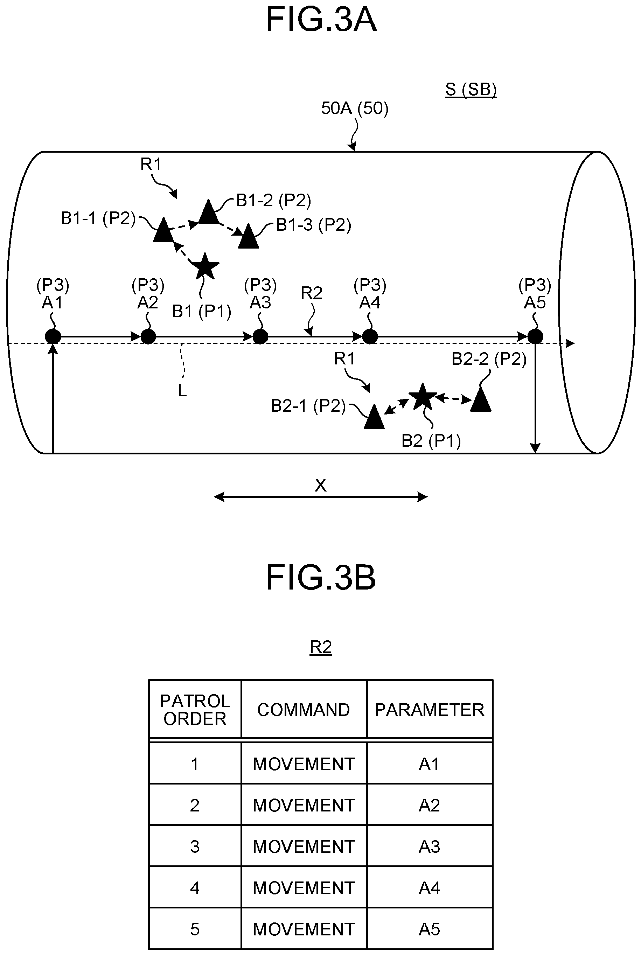

FIG. 3A is an explanatory diagram of an example of generating a global patrol route R2. The global patrol route R2 is a route for globally patrolling the facility to be patrolled represented by the virtual model 50.

The global patrol route generation unit 20F sets one or more third waypoints P3 at positions separated by a predetermined distance from the surface of the virtual model 50 arranged in the virtual space S, and generates a global patrol route R2 that passes through the third waypoints P3. The global patrol route generation unit 20F generates the global patrol route R2 that passes through the third waypoints P3 one or more times.

For example, it is assumed that the mobile body 40 makes a one-way patrol inside a facility to be patrolled having a tubular shape such as a tunnel from the one end side to the other end side of the facility to be patrolled in an extension direction (see a direction indicated by an arrow X and hereinafter, referred to as "extension direction X").

The global patrol route generation unit 20F sets one or more third waypoints P3 along a virtual line L that passes from the one end side to the other end side of the facility to be patrolled in the extension direction X, inside the virtual model 50A of the facility to be patrolled having a tubular shape.

It is preferable that the shortest distance between the virtual line L and the surface of the virtual model 50A is a distance equal to or greater than the above-mentioned predetermined distance between the surface of the virtual model 50 and the first waypoint P1 according to the mobile body characteristic information 12A. That is, it is preferable that the global patrol route generation unit 20F adjusts the shortest distance between the third waypoint P3 and the surface of the virtual model 50 to the predetermined distance or more, which is the value obtained by adding a certain amount of margin to the sum of 1/2 of the size of the mobile body 40 and the movement accuracy, the predetermined distance being included in the mobile body characteristic information 12A. In this case, the global patrol route generation unit 20F can suppress that the third waypoints P3 are set at unreachable positions of the mobile body 40 due to constraints imposed by the mobile body characteristic information 12A, such as the size of the mobile body 40. Furthermore, the global patrol route generation unit 20F can set the third waypoints P3 at positions according to the mobile body characteristic information 12A of the mobile body 40.

It is assumed that the mobile body 40 makes a one-way patrol for the facility to be patrolled having a tubular shape such as a tunnel. In this case, the global patrol route generation unit 20F is only required to set, as the virtual line L, a line passing through the center of a cut plane intersecting the extension direction X inside the virtual model 50A of the facility to be patrolled having a tubular shape along the extension direction X, and to set the third waypoints P3 at predetermined intervals along the extension direction X of the virtual line L. The global patrol route generation unit 20F is only required to use any value determined by the user as the predetermined interval. Furthermore, the global patrol route generation unit 20F may use, as the predetermined interval, a value obtained by adding a certain amount of margin to the movement accuracy of the mobile body 40 included in the mobile body characteristic information 12A.

FIG. 3A illustrates an example of a scene in which the third waypoints P3 respectively represented by a waypoint A1 to a waypoint A5 are set along the virtual line L.

The Global patrol route generation unit 20F, for example, generates the global patrol route R2 starting from a starting point and reaching an end point via the waypoint A1 to the waypoint A5, by using a solution to a traveling salesman problem. Specifically, the global patrol route generation unit 20F generates the global patrol route R2 that sequentially passes through the third waypoints P3 respectively represented by the waypoint A1 to the waypoint A5 set from the one end side to the other end side of the extension direction X.

That is, when the facility to be patrolled having a tubular shape such as a tunnel is targeted for patrol and the mobile body 40 makes a one-way patrol, the global patrol route generation unit 20F generates the global patrol route R2 by connecting the third waypoints P3 set at predetermined intervals along the extension direction X of the virtual model 50A along the virtual line L in order near from the starting point.

FIG. 3B is a schematic diagram illustrating an example of a data structure of the global patrol route R2. For example, the global patrol route R2 is represented by data in which a patrol order, commands, and parameters are correlated with one another. Since the meanings of the patrol order, the command, and the parameter are the same as above, description thereof is omitted.

The description is continued by referring now back to FIG. 1. The patrol route generation unit 20G generates a patrol route R in which the local patrol route R1 is inserted into the global patrol route R2.

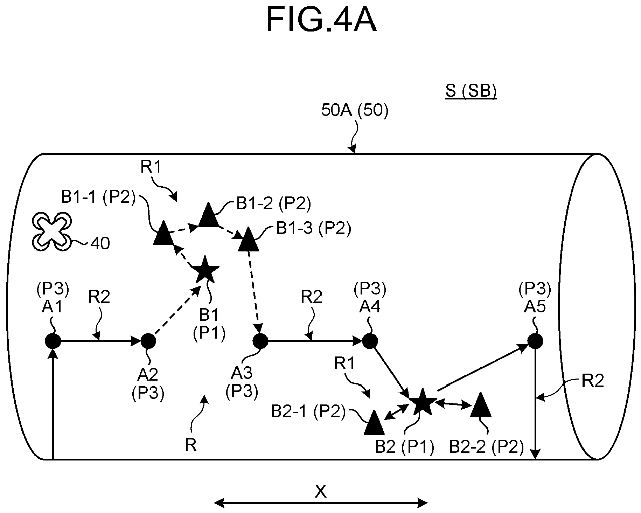

FIG. 4A is an explanatory diagram of an example of generating the patrol route R. The patrol route generation unit 20G acquires the local patrol route R1 from the local patrol route generation unit 20E. Furthermore, the patrol route generation unit 20G acquires the global patrol route R2 from the global patrol route generation unit 20F. The patrol route generation unit 20G generates the patrol route R, in which the local patrol route R1 is inserted into the global patrol route R2, by using these local patrol route R1 and global patrol route R2.

For each local patrol route R1 acquired from the local patrol route generation unit 20E, the patrol route generation unit 20G inserts the local patrol route R1 between two of the third waypoints P3 having a minimum distance to the first waypoint P1 (i.e., a third waypoint P3 having the minimum distance and a third waypoint P3 having the second minimum distance) included in the local patrol route R1 among the third waypoints P3 included in the global patrol route R2.

Specifically, the patrol route generation unit 20G calculates a distance between the first waypoint P1 included in the local patrol route R1 and each of the third waypoints P3 included in the global patrol route R2. Then, the patrol route generation unit 20G inserts the local patrol route R1 between two of the third waypoints P3 where the sum of the distances to the first waypoint P1 is the minimum among the third waypoints P3 included in the global patrol route R2.

Specifically, the patrol route generation unit 20G sequentially extracts the third waypoints P3 constituting the global patrol route R2 along the patrol order represented by the global patrol route R2. Then, the patrol route generation unit 20G calculates the sum of a distance between the extracted third waypoint P3 and the first waypoint P1 and a distance between the next extracted third waypoint P3 and the first waypoint P1. The patrol route generation unit 20G repeats this calculation process each time a new third waypoint P3 is extracted. Then, the patrol route generation unit 20G inserts the local patrol route R1 including the first waypoint P1 between the two of the third waypoints P3 with the smallest calculated sum.

By repeating the above insertion process for each of the local patrol routes R1, the patrol route generation unit 20G generates the patrol route R in which the local patrol route R1 is inserted into the global patrol route R2.

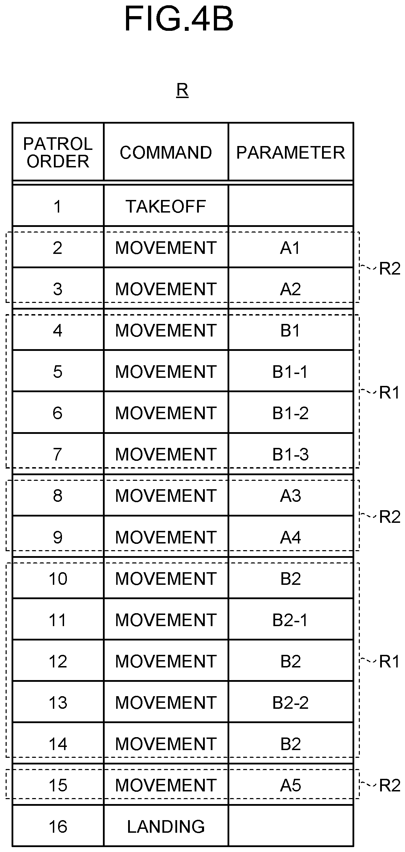

FIG. 4B is a schematic diagram illustrating an example of a data structure of the patrol route R. For example, the patrol route R is represented by data in which a patrol order, commands, and parameters are correlated with one another. Since the meanings of the patrol order, the command, and the parameter are the same as above, description thereof is omitted. As illustrated in FIG. 4B, the patrol route R is a patrol route R in which the local patrol route R1 is inserted into the global patrol route R2.

Moreover, the patrol route generation unit 20G may generate the patrol route R to which a command such as a takeoff command is added to the beginning of the patrol route R and a command such as a landing command is added to the end of the patrol route R (see FIG. 4B). Through these processes, the patrol route generation unit 20G can generate the patrol route R including the takeoff command, a movement command to one or more waypoints P (the first waypoints P1, the second waypoints P2, and the third waypoints P3), and the landing command.

Next, it is assumed that the mobile body 40 reciprocates inside the facility to be patrolled having a tubular shape such as a tunnel between one end side and the other end side of the facility to be patrolled in the extension direction X.

In this case, the global patrol route generation unit 20F and the patrol route generation unit 20G are only required to generate the global patrol route R2 and the patrol route R, for example, in the following manner, respectively.

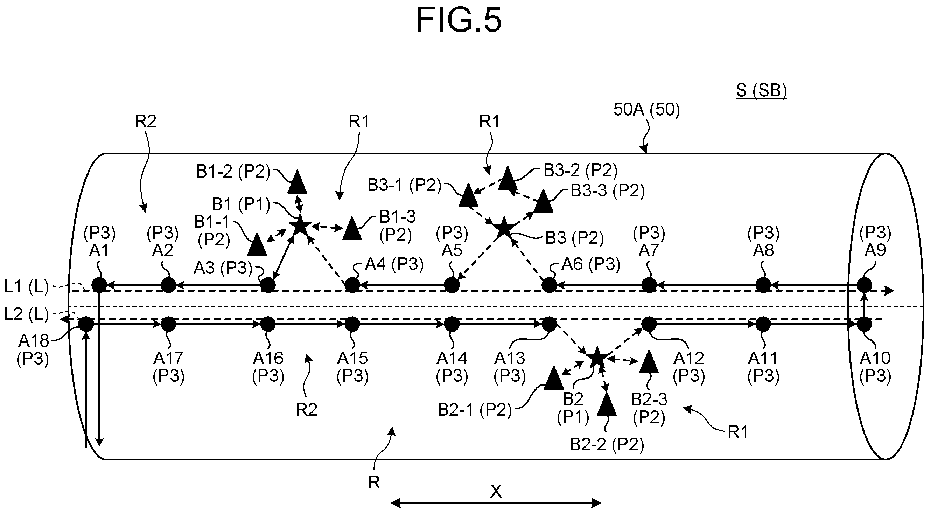

FIG. 5 is an explanatory diagram of an example of generating the global patrol route R2 and the patrol route R. FIG. 5 illustrates an example of a case where the mobile body 40 reciprocates inside the facility to be patrolled having a tubular shape such as a tunnel between one end side and the other end side of the facility to be patrolled in the extension direction X.

As described above, the global patrol route generation unit 20F sets one or more third waypoints P3 at positions separated by a predetermined distance from the surface of the virtual model 50 arranged in the virtual space S, and generates the global patrol route R2 that passes through the third waypoints P3.

When the mobile body 40 reciprocates inside the facility to be patrolled having a tubular shape such as a tunnel along the extension direction X, the global patrol route generation unit 20F sets two virtual lines L that pass through the virtual model 50A of the facility to be patrolled along the extension direction X. These two virtual lines L are virtual lines along the extension direction X in the virtual model 50A having a tubular shape, and are two virtual lines L having different positions in the intersection direction intersecting the extension direction X.

The global patrol route generation unit 20F sets one of the set two virtual lines L as an outbound route L1 and sets the other one as a return route L2. Then, the global patrol route generation unit 20F sets one or more third waypoints P3 along the outbound route L1 from the one end side to the other end side of the outbound route L1 in the extension direction X, and along the return route L2 from the other end side to the one end side of the return route L2 in the extension direction X.

The global patrol route generation unit 20F is only required to set the third waypoints P3 at predetermined intervals along each of the outbound route L1 and the return route L2. The predetermined interval is the same as during the one-way patrol described above.

FIG. 5 illustrates an example of a scene in which the third waypoints P3 respectively represented by a waypoint A1 to a waypoint A9 are set along the outbound route L1 and the third waypoints P3 respectively represented by a waypoint A10 to a waypoint A18 are set along the return route L2. Furthermore, FIG. 5 illustrates an example of a scene in which the second waypoints P2 respectively represented by a waypoint B1-1, a waypoint B1-2, and a waypoint B1-3 are set with respect to the first waypoint P1 represented by the waypoint B1. Furthermore, FIG. 5 illustrates an example of a scene in which the second waypoints P2 respectively represented by a waypoint B3-1, a waypoint B3-2, and a waypoint B3-3 are set with respect to the first waypoint P1 represented by the waypoint B3.

Then, the global patrol route generation unit 20F generates a global patrol route R2 that passes through the set third waypoints P3 one or more times, in the same manner as during the one-way patrol described above. For example, the global patrol route generation unit 20F generates the global patrol route R2 by connecting the third waypoints P3 set on the outbound route L1 in order of proximity to a starting point, and further connecting the third waypoints P3 set on the return route L2 in order from a turning point from the outbound route L1 to the return route L2.

Therefore, when the facility to be patrolled having a tubular shape such as a tunnel is targeted for patrol and the mobile body 40 makes a one-way patrol, the global patrol route generation unit 20F generates the global patrol route R2 by connecting the third waypoints P3 set at predetermined intervals along the extension direction X of the virtual model 50A from the outbound route L1 to the return route L2 in order near from the starting point.

Then, the patrol route generation unit 20G generates a patrol route R in which the local patrol route R1 is inserted into the global patrol route R2 to be subjected to reciprocating patrol.

In this case, the patrol route generation unit 20G is only required to generate the patrol route R in which the local patrol route R1 is inserted into at least one of the global patrol route R2 on the outbound route L1 and the global patrol route R2 on the return route L2. The insertion of the local patrol route R1 into at least one of the global patrol route R2 on the outbound route L1 and the global patrol route R2 on the return route L2 by the patrol route generation unit 20G is only required to be performed in the same manner as during the one-way patrol described above.

As described above, the shapes of the facility to be patrolled and the virtual model 50 of the facility to be patrolled are not limited to a tubular shape such as a tunnel shape. As described with reference to FIG. 2B, the shape of the virtual model 50 may also be the virtual model 50B such as a dome shape.

Even in the case of the virtual model 50B having a dome shape, the global patrol route generation unit 20F and the patrol route generation unit 20G are only required to generate the global patrol route R2 and the patrol route R, respectively, in the same manner as described above.

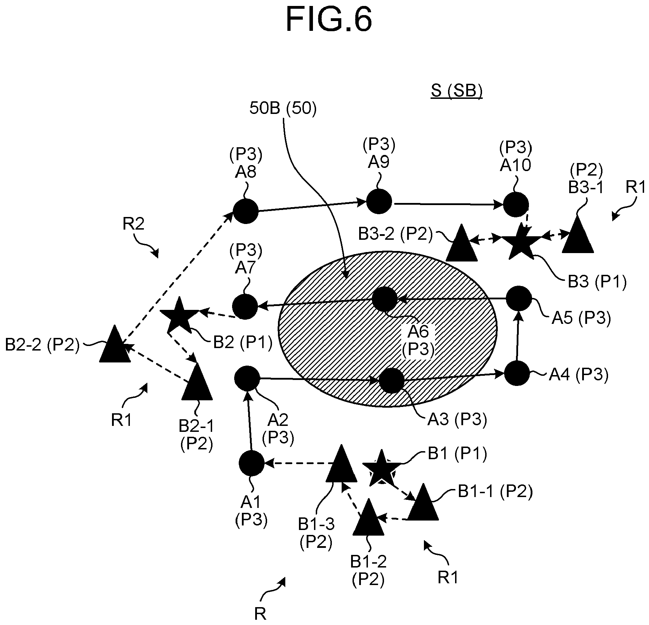

FIG. 6 is an explanatory diagram of an example of generating the global patrol route R2 and the patrol route R. FIG. 6 illustrates a mode in which the virtual model 50 is the virtual model 50B having a dome shape.

As described above, the global patrol route generation unit 20F sets one or more third waypoints P3 at positions separated by a predetermined distance from the surface of the virtual model 50B arranged in the virtual space S, and generates a global patrol route R2 that passes through the third waypoints P3. For example, the global patrol route generation unit 20F sets the third waypoints P3 so as to make a global patrol in the virtual space S along the surface of the virtual model 50B having a dome shape. FIG. 6 illustrates an example of a case where a plurality of waypoints A1 to A10 are set as the third waypoints P3, which are S-shaped waypoints that travel in an S shape along the dome-shaped surface of the virtual model 50B.

Then, the global patrol route generation unit 20F generates the global patrol route R2 that passes through these third waypoints P3, in the same manner as described above. Then, the patrol route generation unit 20G is only required to generate the patrol route R in which the local patrol route R1 is inserted into the global patrol route R2, in the same manner as described above.

The description is continued by referring now back to FIG. 1.

The output control unit 20H outputs the patrol route R generated by the patrol route generation unit 20G. Specifically, the output control unit 20H outputs the patrol route R to at least one of the UI unit 14, the UI unit 30B, and the mobile body 40.

For example, the output control unit 20H outputs the patrol route R to the UI unit 14 or the UI unit 30B so that the patrol route R is displayed on the UI unit 14 or the UI unit 30B. The output control unit 20H may display the local patrol route R1 and the global patrol route R2 included in the patrol route R, in different display forms. For example, the output control unit 20H displays the local patrol route R1 and the global patrol route R2 in different display forms by changing at least one of a color and a line type. The line type is defined by, for example, a type of a line such as a solid line and a dotted line, and a thickness of the line.

Furthermore, the output control unit 20H may display the first waypoint P1, the second waypoint P2, and the third waypoint P3 in different display forms. For example, the output control unit 20H displays symbols representing the first waypoint P1, second waypoint P2, and third waypoint P3 in different display forms by changing at least one of a color and a shape.

For example, the output control unit 20H displays the virtual model 50A in which the patrol route R illustrated in FIG. 4A is arranged. Furthermore, for example, the output control unit 20H displays the virtual model 50A or the virtual model 50B in which the patrol route R illustrated in FIG. 5 or FIG. 6 is arranged.

The output control unit 20H displays the patrol route R, so that the user can visibly recognize the patrol route R. Furthermore, the output control unit 20H displays the patrol route R before the mobile body 40 starts moving along the route R, so that the visualized patrol route R can be provided to the user in advance.

Furthermore, the output control unit 20H outputs the patrol route R to the mobile body 40.

Upon receiving the patrol route R, the mobile body 40 takes off according to the patrol route R, moves to the waypoints P in sequence according to the patrol order specified by the patrol route R, and lands.

The mobile body 40 may move according to the patrol route R when the patrol route R is received from the mobile body management device 10 and a start signal representing the start of movement such as an inspection start instruction is received from the operation terminal 30.

When the mobile body 40 is provided with a photographing device as an example of the sensor, the mobile body 40 may continue to take pictures at all times while moving along the patrol route R. Furthermore, the mobile body 40 may perform photography only during the period of movement along the local patrol route R1 included in the patrol route R. Furthermore, the mobile body 40 may temporarily pause movement and capture still images at all the waypoints P included in the patrol route R, or at respective positions of the first waypoints P1 and the second waypoints P2 constituting the local patrol route R1. Furthermore, the mobile body 40 may sense odor, temperature, or the like by using the sensor provided on the mobile body 40.

That is, at least one of the first waypoint P1, the second waypoint P2, and the third waypoint P3 included in the patrol route R serves as a waypoint P on which the mobile body 40 performs a predetermined process such as photography and observation.

Furthermore, the mobile body 40 may also transmit a sensing result by the sensor, such as a captured image, to the operation terminal 30.

When the mobile body 40 detects an abnormality while moving along the patrol route R, the mobile body 40 may transmit abnormality information indicating the abnormality detection to the mobile body management device 10 or the operation terminal 30. For example, when it is determined that the sensing result by the sensor indicates the abnormality or that the captured image includes an abnormality, the mobile body 40 transmits abnormality information and abnormality position information indicating an abnormality detection position to the mobile body management device 10 or the operation terminal 30.

Upon receiving the abnormality information and the abnormality position information, the control unit 20 of the mobile body management device 10 is only required to perform the following process, for example. For example, the local patrol route generation unit 20E of the control unit 20 newly generates a local patrol route R1 using the received abnormality position information as the first waypoint P1 or the reference point P4. Then, the patrol route generation unit 20G regenerates a patrol route R in which the newly generated local patrol route R1 is further inserted into the patrol route R used for the movement of the mobile body 40 having transmitted the abnormality information. Then, the output control unit 20H may transmit the regenerated patrol route R to the mobile body 40.

Next, an example of the flow of information processing performed by the mobile body management device 10 of the present arrangement is described.

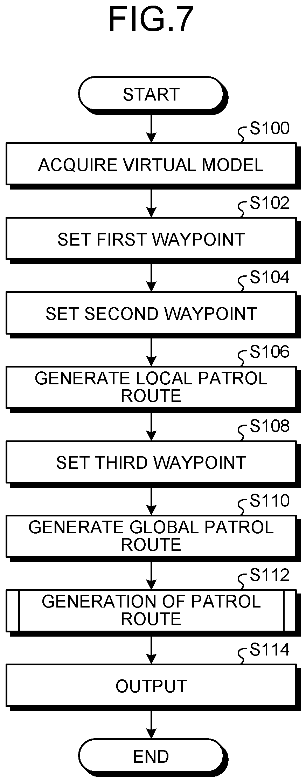

FIG. 7 is a flowchart illustrating an example of the flow of information processing performed by the mobile body management device 10 of the present arrangement.

The virtual model acquisition unit 20A acquires the virtual model 50 of a facility to be patrolled by the mobile body 40 (step S100).

The first setting unit 20C sets one or more first waypoints P1 in the virtual space S where the virtual model 50 acquired in step S100 is arranged (step S102).

The second setting unit 20D sets one or more second waypoints P2 around the first waypoint P1 set in step S102 in the virtual space S (step S104).

For each first waypoint P1 set in step S102, the local patrol route generation unit 20E generates a plurality of local patrol routes R1 that pass through the first waypoints P1 and the second waypoints P2 around the first waypoint P1 (step S106).

The global patrol route generation unit 20F sets one or more third waypoints P3 at positions separated by a predetermined distance from the surface of the virtual model 50 arranged in the virtual space S (step S108). Then, the global patrol route generation unit 20F generates a global patrol route R2 that passes through the set third waypoints P3 (step S110).

Next, the patrol route generation unit 20G generates a patrol route R in which the local patrol route R1 generated in step S106 is inserted into the global patrol route R2 generated in step S110 (step S112).

The output control unit 20H outputs the patrol route R generated in step S112 (step S114). Then, this routine is ended.

Next, an example of the flow of the process of generating the patrol route R (see step S112 in FIG. 7) by the patrol route generation unit 20G is described.

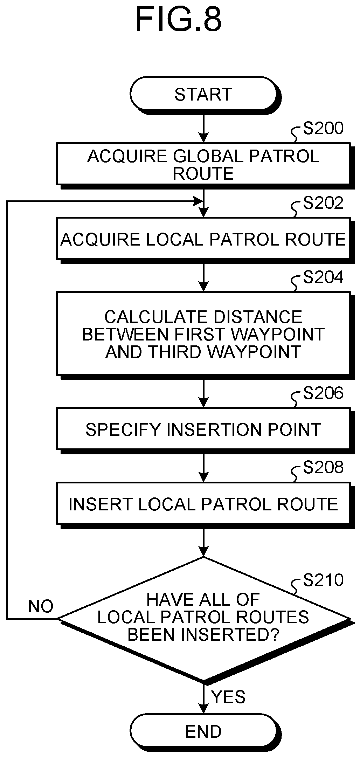

FIG. 8 is a flowchart illustrating an example of the flow of the process of generating the patrol route R by the patrol route generation unit 20G.

The patrol route generation unit 20G acquires the global patrol route R2 from the global patrol route generation unit 20F (step S200).

The patrol route generation unit 20G acquires one local patrol route R1 not to be subjected to a process of step S208 to be described below among the local patrol routes R1 generated by the local patrol route generation unit 20E (step S202) .

The patrol route generation unit 20G calculates a distance between the first waypoint P1 included in the local patrol route R1 acquired in step S202 and each of the third waypoints P3 included in the global patrol route R2 acquired in step S200 (step S204).

On the basis of the calculation result of the distance in step S204, the patrol route generation unit 20G specifies, as an insertion point, a point between two of the third waypoints P3 where the sum of distances to the first waypoint P1 is the minimum among the third waypoints P3 included in the global patrol route R2 (step S206). Specifically, the patrol route generation unit 20G sequentially extracts the third waypoints P3 constituting the global patrol route R2 along a patrol order represented by the global patrol route R2. Then, the patrol route generation unit 20G calculates the sum of a distance between the extracted third waypoint P3 and the first waypoint P1 and a distance between the next extracted third waypoint P3 and the first waypoint P1. The patrol route generation unit 20G repeats this calculation process each time a new third waypoint P3 is extracted. Then, the patrol route generation unit 20G specifies, as the insertion point, a point between two of the third waypoints P3 with the smallest calculated sum.

The patrol route generation unit 20G inserts the local patrol route R1 acquired in step S202 into the insertion point specified in step S206 in the global patrol route R2 (step S208).

Next, the patrol route generation unit 20G determines whether all of the local patrol routes R1 generated by the local patrol route generation unit 20E have been inserted into the global patrol route R2 (step S210). When a negative determination is made in step S210 (step S210: No), the process returns to step S202 above. When a positive determination is made in step S210 (step S210: Yes), this routine is ended.

As described above, the mobile body management device 10 of the present arrangement includes the virtual model acquisition unit 20A, the reception unit 20B, the first setting unit 20C, the second setting unit 20D, the local patrol route generation unit 20E, the global patrol route generation unit 20F, and the patrol route generation unit 20G. The virtual model acquisition unit 20A acquires the virtual model 50 of a facility to be patrolled by the mobile body 40. The first setting unit 20C sets the first waypoints P1, which are essential route points of the mobile body 40, in the virtual space S where the virtual model 50 is arranged. The second setting unit 20D sets one or more second waypoints P2 around the first waypoint P1. For each first waypoint P1, the local patrol route generation unit 20E generates the local patrol route R1 that passes through the first waypoints P1 and the second waypoints P2 around the first waypoint P1. The global patrol route generation unit 20F sets one or more third waypoints P3 at positions separated by a predetermined distance from the surface of the virtual model 50, and generates the global patrol route R2 that passes through the third waypoints P3. The patrol route generation unit 20G generates the patrol route R in which the local patrol route R1 is inserted into the global patrol route R2.

In the related art, a plurality of waypoints are uniformly set according to an object in a space to be patrolled, and a patrol route is generated to simply patrol the waypoints. Therefore, in the related art, even when the space to be patrolled includes important locations such as inspection targets, a mobile body simply traces the waypoints along the patrol route and moves around, which makes it difficult to move according to the important points. For example, it is assumed that a camera mounted on a drone, which is an example of a mobile body 40, is used to take pictures of a facility to be inspected. In this case, in the related art, since the drone simply patrols the uniformly arranged waypoints, important locations such as important facilities such as meters or areas where abnormalities such as cracks occur may be incorrectly captured due to shake of the camera mounted on the drone. That is, the related art does not provide a mobile patrol route according to the importance of the inspection target.

On the other hand, the mobile body management device 10 of the present arrangement generates the patrol route R by inserting the local patrol route R1, along which the mobile body 40 intensively patrols around essential route waypoints, that is, the first waypoints P1 that are waypoints P existing at important locations, into the global patrol route R2.

Therefore, the mobile body management device 10 of the present arrangement can generate the patrol route R along which the mobile body 40 intensively patrols the important locations.

Accordingly, the mobile body management device 10 of the present arrangement can provide a mobile patrol route R according to the importance of the inspection target.

Furthermore, the patrol route generation unit 20G of the mobile body management device 10 of the present arrangement inserts the local patrol route R1 between two of the third waypoints P3 having a minimum distance to the first waypoint P1 included in the local patrol route R1 among the third waypoints P3 included in the global patrol route R2.

Therefore, in addition to the above effects, the mobile body management device 10 of the present arrangement can generate a patrol route R along which the mobile body 40 on patrol can intensively patrol an important location when approaching the important location. In other words, the mobile body management device 10 of the present arrangement can provide the patrol route R that can be efficiently patrolled.

### Second Arrangement

The above arrangement has described an example in which the second setting unit 20D sets one or more second waypoints around the first waypoint P1 in the virtual space S and the local patrol route generation unit 20E generates the local patrol route R1 that passes through the first waypoints P1 and the second waypoints P2 around the first waypoint P1.

However, the local patrol route R1 is only required to be any route in which the first waypoint P1 and an area around the first waypoint P1 can be intensively patrolled, and is not limited to a route in which the first waypoints P1 and the second waypoints P2 around the first waypoint P1 are patrolled.

In the present arrangement, a mode for generating a local patrol route R1 by setting peripheral stay time information at the first waypoint P1 is described. In the present arrangement, the same configurations and functions as in the above arrangement are given the same reference numerals and detailed description thereof is omitted.

FIG. 1 is a schematic diagram of an example of a mobile body management system 1B of the present arrangement.

The mobile body management system 1B includes a mobile body management device 10B, the operation terminal 30, and the mobile body 40. The mobile body management device 10B, the operation terminal 30, and the mobile body 40 are communicatively connected to one another. The mobile body management system 1B is the same as the mobile body management system 1 of the above arrangement except that the mobile body management device 10B is provided instead of the mobile body management device 10.

The mobile body management device 10B includes the storage unit 12, the UI unit 14, the communication unit 16, and a control unit 21. The storage unit 12, the UI unit 14, the communication unit 16, and the control unit 21 are communicably connected to one another via the bus 18 or the like. The mobile body management device 10B is the same as the mobile body management device 10 of the above arrangement except that the control unit 21 is provided instead of the control unit 20.

The control unit 21 performs information processing in the mobile body management device 10B. The control unit 21 includes the virtual model acquisition unit 20A, the reception unit 20B, the first setting unit 20C, a second setting unit 21D, a local patrol route generation unit 21E, the global patrol route generation unit 20F, the patrol route generation unit 20G, and the output control unit 20H. The virtual model acquisition unit 20A, the reception unit 20B, the first setting unit 20C, the global patrol route generation unit 20F, the patrol route generation unit 20G, and the output control unit 20H are the same as those in the above arrangement.

That is, the control unit 21 has the same configuration as the control unit 20 of the above arrangement, except that the second setting unit 21D is provided instead of the second setting unit 20D and the local patrol route generation unit 21E is provided instead of the local patrol route generation unit 20E.

The second setting unit 21D sets, for each of one or more first waypoints P1 set by the first setting unit 20C, peripheral stay time information representing the peripheral stay time on the first waypoint P1.

The peripheral stay time information is information representing the stay time during which the mobile body 40 stays in an area including the first waypoint P1 and an area surrounding the first waypoint P1.

The peripheral stay time information time is only required to be information representing a predetermined time. The peripheral stay time information may be appropriately changed by an operation instruction or the like on the UI unit 30B, the UI unit 14, or the like by the user.

The second setting unit 21D sets the peripheral stay time information for each of the first waypoints P1 set by the first setting unit 20C.

The local patrol route generation unit 21E generates a local patrol route R1 by assigning the peripheral stay time information set by the second setting unit 21D to the first waypoint P1. The second setting unit 21D may set different peripheral stay time information for each of the first waypoints P1. The local patrol route generation unit 21E is only required to generate the local patrol route R1 by assigning the peripheral stay time information set by the second setting unit 21D to a corresponding first waypoint P1.

Then, the patrol route generation unit 20G can generate a patrol route R by inserting the local patrol route R1 generated by the local patrol route generation unit 21E into a global patrol route R2, in the same manner as in the above arrangement.

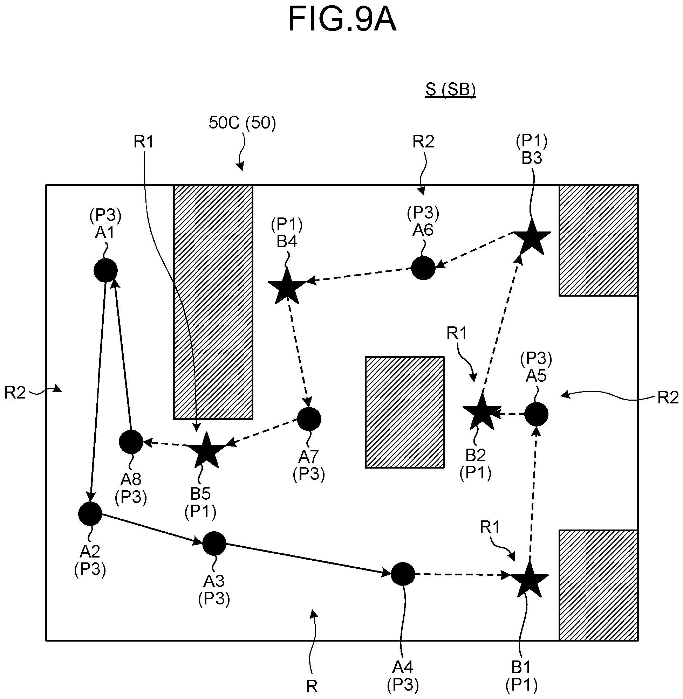

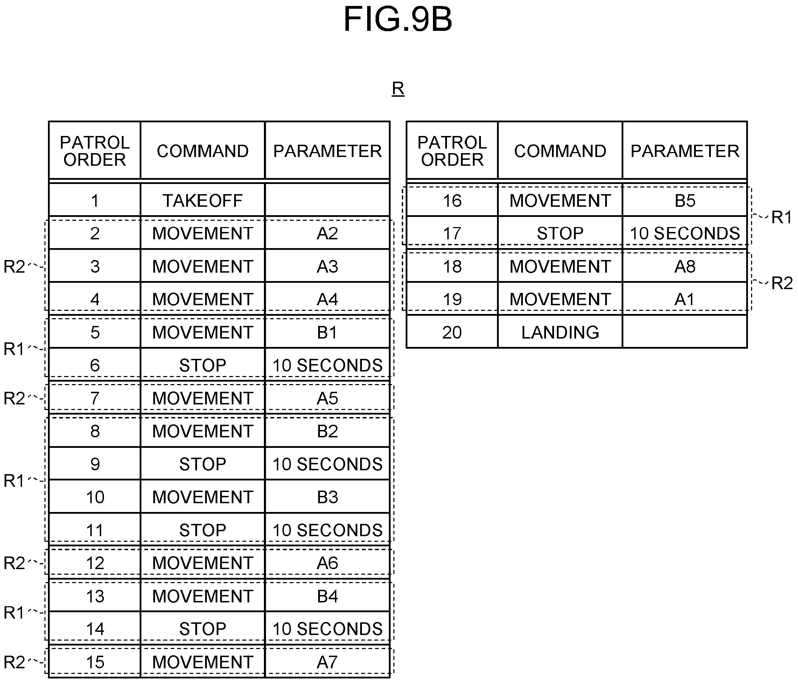

FIG. 9A and FIG. 9B are explanatory diagrams of an example of the patrol route R according to the present arrangement.

FIG. 9A illustrates an example of a virtual model 50C including a group of a plurality of objects having a rectangular shape. The virtual model 50C is an example of the virtual model 50.

FIG. 9A illustrates an example of a scene in which five waypoints P respectively represented by a waypoint B1 to a waypoint B5 are set as the first waypoints P1. In this case, the second setting unit 21D sets, for each of the first waypoints P1, the peripheral stay time information representing the peripheral stay time on the first waypoint P1, and the local patrol route generation unit 21E generates the local patrol route R1 with the peripheral stay time information set for the first waypoint P1. For example, it is assumed that the local patrol route generation unit 21E generates a local route R1 in which peripheral stay time information "10 seconds" is assigned to each of the first waypoints P1 represented by the waypoint B1 to the waypoint B5.

Then, it is assumed that the global patrol route generation unit 20F generates a global patrol route R2 that passes through third waypoints P3 respectively represented by a waypoint A1 to a waypoint A8. For example, it is assumed that the global patrol route generation unit 20F generates a global patrol route R2 starting from the waypoint A1 and returning to the waypoint A1 via the waypoint A2 to the waypoint A8 by using a solution to a traveling salesman problem.

In this case, the patrol route generation unit 20G generates the patrol route R in which the local patrol route R1 is inserted into the global patrol route R2, in the same manner as in the above arrangement.

FIG. 9B is a schematic diagram illustrating an example of a data structure of the patrol route R. For example, the local patrol route generation unit 21E generates a local patrol route R1 by assigning a command representing "stop" to each of the first waypoints P1 respectively represented by the waypoint B1 to the waypoint B5 and assigning the peripheral stay time information "10 seconds" as a parameter. Therefore, the patrol route R in which the peripheral stay time information is assigned to each of the first waypoints P1 is generated.

As described above, in the mobile body management device 10B of the present arrangement, the second setting unit 21D sets the peripheral stay time information in each of the first waypoints P1 set by the first setting unit 20C. The local patrol route generation unit 21E generates a local patrol route R1 by assigning the peripheral stay time information set by the second setting unit 21D to the first waypoint P1. Then, the patrol route generation unit 20G generates the patrol route R by inserting the local patrol route R1 generated by the local patrol route generation unit 21E into the global patrol route R2, in the same manner as in the above arrangement.

Therefore, the mobile body management device 10B of the present arrangement generates the patrol route R by inserting the local patrol route R1, along which the mobile body 40 intensively patrols essential route points, that is, the first waypoints P1, which are waypoints P existing at important locations, and around the first waypoint P1, into the global patrol route R2.

Therefore, the mobile body management device 10B of the present arrangement can provide a mobile patrol route R according to the importance of an inspection target, in the same manner as in the above arrangement.

The mobile body management device 10B of the present arrangement may further have the functions of the second setting unit 20D of the above arrangement and the local patrol route generation unit 21E.

That is, the second setting unit 21D of the mobile body management device 10B may perform at least one of setting one or more second waypoints P2 around the first waypoint P1 and setting the peripheral stay time information representing the peripheral stay time on the first waypoint P1 to the first waypoint P1.

Then, the local patrol route generation unit 21E of the mobile body management device 10B may generate, for each of the first waypoints P1, a local patrol route R1 in which at least one of passing through the first waypoints P1 and the second waypoints P2 around the first waypoint P1 and assigning the peripheral stay time information to the first waypoint P1 has been performed.

Next, an example of the hardware configuration of the mobile body management device 10, the mobile body management device 10B, and the operation terminal 30 of the above arrangements is described.

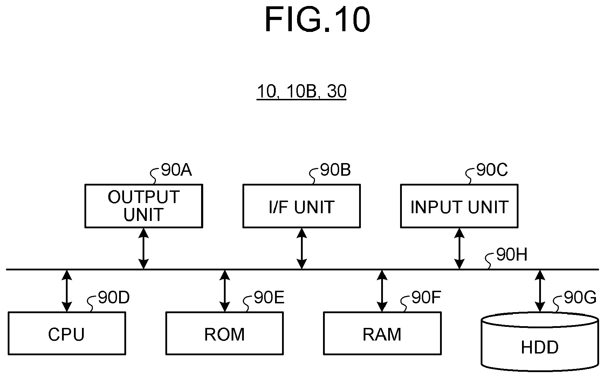

FIG. 10 is a hardware configuration diagram of an example of the mobile body management device 10, the mobile body management device 10B, and the operation terminal 30 of the above arrangements.

Each of the mobile body management device 10, the mobile body management device 10B, and the operation terminal 30 of the above arrangements includes a control device such as a central processing unit (CPU) 90D, a storage device such as a read only memory (ROM) 90E, a random access memory (RAM) 90F, and a hard disk drive (HDD) 90G, an I/F unit 90B that is an interface with various devices, an output unit 90A that outputs various information, an input unit 90C that receives an operation by the user, and a bus 90H that connects the parts to one another, and has a hardware configuration using a normal computer.

In the mobile body management device 10, the mobile body management device 10B, and the operation terminal 30 of the above arrangements, the CPU 90D reads a computer program from the ROM 90E onto the RAM 90F and executes the computer program, so that each of the above parts is implemented on a computer.

The computer program for performing each of the above processes performed by the mobile body management device 10, the mobile body management device 10B, and the operation terminal 30 of the above arrangements may be stored in the HDD 90G. Furthermore, the computer program for performing each of the above processes performed in the mobile body management device 10, the mobile body management device 10B, and the operation terminal 30 of the above arrangements may be provided by being incorporated in advance in the ROM 90E.

Furthermore, the computer program for performing each of the above processes performed by the mobile body management device 10, the mobile body management device 10B, and the operation terminal 30 of the above arrangements may be provided as a computer program product in an installable or executable format as files stored on a computer-readable storage medium such as CD-ROM, CD-R, a memory card, a digital versatile disc (DVD), and a flexible disk (FD). Furthermore, the computer program for performing each of the above processes performed by the mobile body management device 10, the mobile body management device 10B, and the operation terminal 30 of the above arrangements may be provided by being stored on a computer connected to a network such as the Internet and downloaded via the network. Furthermore, the computer program for performing each of the above processes performed by the mobile body management device 10, the mobile body management device 10B, and the operation terminal 30 of the above arrangements may be provided or distributed via the network such as the Internet

The adaptation targets of the mobile body management device 10 and the mobile body management device 10B of the above arrangements are not limited. For example, the mobile body management device 10 and the mobile body management device 10B of the above arrangements can be preferably applied to an inspection system utilizing the mobile body 40.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made.
Example 1. According to an arrangement, a mobile body management device (10, 10B) includes a virtual model acquisition unit (20A), a first setting unit (20C), a second setting unit (20D, 21D), a local patrol route generation unit (20E, 21E), a global patrol route generation unit (20F), and a patrol route generation unit (20G). The virtual model acquisition unit (20A) acquires a virtual model of a facility to be patrolled by a mobile body (40). The first setting unit (20C) sets first waypoints, which are essential route points of the mobile body (40), in a virtual space where the virtual model is arranged. The second setting unit (20D, 21D) performs at least one of setting one or more second waypoints around a first waypoint and setting, in the first waypoint, peripheral stay time information representing a peripheral stay time on the first waypoint. The local patrol route generation unit (20E, 21E) generates, for each of the first waypoints, a local patrol route in which at least one of passing through the first waypoint and the second waypoints around the first waypoint and assigning the peripheral stay time information to the first waypoint has been performed. The global patrol route generation unit (20F) sets one or more third waypoints at positions separated by a predetermined distance from a surface of the virtual model and generates a global patrol route that passes through a third waypoint. The patrol route generation unit (20G) generates a patrol route in which the local patrol route is inserted into the global patrol route.
Example 2. The mobile body management device (10, 10B) according to example 1 further includes an output control unit (20H) that outputs the patrol route.
Example 3. In the mobile body management device (10, 10B) according to example 1 or 2, the second setting unit (20D, 21D) sets the second waypoints in at least one of within a range of a predetermined distance from the first waypoint in the virtual space and on one or more concentric circles with the first waypoint as a center, and the local patrol route generation unit (20E, 21E) generates, for each of the first waypoints, the local patrol route that sequentially passes through the first waypoint and each of the second waypoints around the first waypoint one or more times.
Example 4. In the mobile body management device (10, 10B) according to any one of examples 1 to 3, for each of the local patrol routes, the patrol route generation unit (20G) generates the patrol route in which the local patrol route is inserted between two of the third waypoints having a minimum distance to the first waypoint included in the local patrol route among the third waypoints included in the global patrol route.
Example 5. In the mobile body management device (10, 10B) according to any one of examples 1 to 4, the global patrol route generation unit (20F) generates the global patrol route that passes through the third waypoints one or more times.
Example 6. In the mobile body management device (10, 10B) according to any one of examples 1 to 5, at least one of a distance between the surface of the virtual model and the first waypoint, a distance between the surface of the virtual model and the second waypoint, and a distance between the surface of the virtual model and the third waypoint is a distance according to mobile body characteristic information of the mobile body (40).
Example 7. In the mobile body management device (10, 10B) according to any one of examples 1 to 6, at least one of the first waypoint, the second waypoint, and the third waypoint is a waypoint on which the mobile body (40) performs a predetermined process.
Example 8. The mobile body management device (10, 10B) according to any one of examples 1 to 7 further includes a reception unit (20B) that receives operation input by a user. The first setting unit (20C) sets the first waypoint at a position separated by a predetermined distance in a direction away from the surface of the virtual model with reference to a reference point on the surface of the virtual model received by the reception unit (20B).
Example 9. In the mobile body management device (10, 10B) according to any one of examples 1 to 8, when the mobile body (40) makes a one-way patrol inside the facility to be patrolled having a tubular shape from one end side to another end side of the facility to be patrolled in an extension direction, the global patrol route generation unit (20F) sets the one or more third waypoints along a virtual line that passes from the one end side to the other end side of the facility to be patrolled in the extension direction, inside the virtual model of the facility to be patrolled.
Example 10. In the mobile body management device (10, 10B) according to any one of examples 1 to 9, when the mobile body (40) reciprocates inside the facility to be patrolled having a tubular shape between one end side and another end side of the facility to be patrolled in the extension direction, the global patrol route generation unit (20F) sets one of two virtual lines, which pass through the virtual model of the facility to be patrolled along the extension direction of the facility to be patrolled and have different positions in an intersection direction intersecting in the extension direction, as an outbound route, sets the other of the two virtual lines as a return route, and sets the one or more third waypoints along the outbound route from the one end side to the other end side of the outbound route in the extension direction and along the return route from the other end side to the one end side of the return route in the extension direction.
Example 11. In the mobile body management device (10, 10B) according to example 10, the patrol route generation unit (20G) generates the patrol route in which the local patrol route is inserted into at least one of the global patrol route on the outbound route and the global patrol route on the return route.
Example 12. According to an arrangement, a mobile body management method includes a virtual model acquisition of acquiring a virtual model of a facility to be patrolled by a mobile body (40); a first setting of setting first waypoints, which are essential route points of the mobile body (40), in a virtual space where the virtual model is arranged; a second setting of performing at least one of setting one or more second waypoints around a first waypoint and setting, in the first waypoint, peripheral stay time information representing a peripheral stay time on the first waypoint; a local patrol route generation of generating, for each of the first waypoints, a local patrol route in which at least one of passing through the first waypoint and the second waypoints around the first waypoint and assigning the peripheral stay time information to the first waypoint has been performed; a global patrol route generation of setting one or more third waypoints at positions separated by a predetermined distance from a surface of the virtual model and generating a global patrol route that passes through a third waypoint; and a patrol route generation of generating a patrol route in which the local patrol route is inserted into the global patrol route.
Example 13. According to an arrangement, a mobile body management computer program product having a computer readable medium including programmed instructions stored therein, wherein the instructions, when executed by a computer, cause the computer to perform: a virtual model acquisition of acquiring a virtual model of a facility to be patrolled by a mobile body (40); a first setting of setting first waypoints, which are essential route points of the mobile body (40), in a virtual space where the virtual model is arranged; a second setting of performing at least one of setting one or more second waypoints around a first waypoint and setting, in the first waypoint, peripheral stay time information representing a peripheral stay time on the first waypoint; a local patrol route generation of generating, for each of the first waypoints, a local patrol route in which at least one of passing through the first waypoint and the second waypoints around the first waypoint and assigning the peripheral stay time information to the first waypoint has been performed; a global patrol route generation of setting one or more third waypoints at positions separated by a predetermined distance from a surface of the virtual model and generating a global patrol route that passes through a third waypoint; and a patrol route generation of generating a patrol route in which the local patrol route is inserted into the global patrol route.
Example 14. In the mobile body management computer program product according to example 13, the instructions cause the computer to further perform an output control of outputting the patrol route.
Example 15. In the mobile body management computer program product according to example 13 or 14, in the second setting, the second waypoints are set in at least one of within a range of a predetermined distance from the first waypoint in the virtual space and on one or more concentric circles with the first waypoint as a center; and in the local patrol route generation, the local patrol route that sequentially passes through the first waypoint and each of the second waypoints around the first waypoint one or more times is generated for each of the first waypoints.
Example 16. In the mobile body management computer program product according to any one of examples 13 to 15, in the patrol route generation, the patrol route in which the local patrol route is inserted between two of the third waypoints having a minimum distance to the first waypoint included in the local patrol route among the third waypoints included in the global patrol route is generated for each of the local patrol routes.
Example 17. In the mobile body management computer program product according to any one of examples 13 to 16, in the global patrol route generation, the global patrol route that passes through the third waypoints one or more times is generated.
Example 18. In the mobile body management computer program product according to any one of examples 13 to 17, at least one of a distance between the surface of the virtual model and the first waypoint, a distance between the surface of the virtual model and the second waypoint, and a distance between the surface of the virtual model and the third waypoint is a distance according to mobile body characteristic information of the mobile body (40).
Example 19. In the mobile body management computer program product according to any one of examples 13 to 18, at least one of the first waypoint, the second waypoint, and the third waypoint is a waypoint on which the mobile body (40) performs a predetermined process.
Example 20. In the mobile body management computer program product according to any one of examples 13 to 19, the instructions cause the computer to further perform a reception of receiving operation input by a user; and in the first setting, the first waypoint is set at a position separated by a predetermined distance in a direction away from the surface of the virtual model with reference to a reference point on the surface of the virtual model received by the reception unit (20B).
Example 21. In the mobile body management computer program product according to any one of claims 13 to 20, in the global patrol route generation, when the mobile body (40) makes a one-way patrol inside the facility to be patrolled having a tubular shape from one end side to another end side of the facility to be patrolled in an extension direction, the one or more third waypoints are set along a virtual line that passes from the one end side to the other end side of the facility to be patrolled in the extension direction, inside the virtual model of the facility to be patrolled.
Example 22. In the mobile body management computer program product according to any one of examples 13 to 21, in the global patrol route generation, when the mobile body (40) reciprocates inside the facility to be patrolled having a tubular shape between one end side and another end side of the facility to be patrolled in the extension direction, one of two virtual lines, which pass through the virtual model of the facility to be patrolled along the extension direction of the facility to be patrolled and have different positions in an intersection direction intersecting the extension direction, is set as an outbound route, the other of the two virtual lines is set as a return route, and the one or more third waypoints are set along the outbound route from the one end side to the other end side of the outbound route in the extension direction and along the return route from the other end side to the one end side of the return route in the extension direction.
Example 23. In the mobile body management computer program product according to example 22, in the patrol route generation, the patrol route in which the local patrol route is inserted into at least one of the global patrol route on the outbound route and the global patrol route on the return route is generated.
Example 24. According to an arrangement, a mobile body management system includes a mobile body (40), a virtual model acquisition unit (20A), a first setting unit (20C), a second setting unit (20D, 21D), a local patrol route generation unit (20E, 21E), a global patrol route generation unit (20F), and a patrol route generation unit (20G). The virtual model acquisition unit (20A) acquires a virtual model of a facility to be patrolled by the mobile body (40). The first setting unit (20C) sets first waypoints, which are essential route points of the mobile body (40), in a virtual space where the virtual model is arranged. The second setting unit (20D, 21D) performs at least one of setting one or more second waypoints around a first waypoint and setting, in the first waypoint, peripheral stay time information representing a peripheral stay time on the first waypoint. The local patrol route generation unit (20E, 21E) generates, for each of the first waypoints, a local patrol route in which at least one of passing through the first waypoint and the second waypoints around the first waypoint and assigning the peripheral stay time information to the first waypoint has been performed. The global patrol route generation unit (20F) sets one or more third waypoints at positions separated by a predetermined distance from a surface of the virtual model and generates a global patrol route that passes through a third waypoint. The patrol route generation unit (20G) generates a patrol route in which the local patrol route is inserted into the global patrol route.

## Claims

1. A mobile body management device (10, 10B) comprising:
a virtual model acquisition unit (20A) that acquires a virtual model of a facility to be patrolled by a mobile body (40) ;
a first setting unit (20C) that sets first waypoints, which are essential route points of the mobile body (40), in a virtual space where the virtual model is arranged;
a second setting unit (20D, 21D) that performs at least one of setting one or more second waypoints around a first waypoint and setting, in the first waypoint, peripheral stay time information representing a peripheral stay time on the first waypoint;
a local patrol route generation unit (20E, 21E) that generates, for each of the first waypoints, a local patrol route in which at least one of passing through the first waypoint and the second waypoints around the first waypoint and assigning the peripheral stay time information to the first waypoint has been performed;
a global patrol route generation unit (20F) that sets one or more third waypoints at positions separated by a predetermined distance from a surface of the virtual model and generates a global patrol route that passes through a third waypoint; and
a patrol route generation unit (20G) that generates a patrol route in which the local patrol route is inserted into the global patrol route.

2. The mobile body management device (10, 10B) according to claim 1, further comprising an output control unit (20H) that outputs the patrol route.

3. The mobile body management device (10, 10B) according to claim 1 or 2, wherein
the second setting unit (20D, 21D) sets the second waypoints in at least one of within a range of a predetermined distance from the first waypoint in the virtual space and on one or more concentric circles with the first waypoint as a center, and
the local patrol route generation unit (20E, 21E) generates, for each of the first waypoints, the local patrol route that sequentially passes through the first waypoint and each of the second waypoints around the first waypoint one or more times.

4. The mobile body management device (10, 10B) according to any one of claims 1 to 3, wherein for each of the local patrol routes, the patrol route generation unit (20G) generates the patrol route in which the local patrol route is inserted between two of the third waypoints having a minimum distance to the first waypoint included in the local patrol route among the third waypoints included in the global patrol route.

5. The mobile body management device (10, 10B) according to any one of claims 1 to 4, wherein the global patrol route generation unit (20F) generates the global patrol route that passes through the third waypoints one or more times.

6. The mobile body management device (10, 10B) according to any one of claims 1 to 5, wherein at least one of a distance between the surface of the virtual model and the first waypoint, a distance between the surface of the virtual model and the second waypoint, and a distance between the surface of the virtual model and the third waypoint is a distance according to mobile body characteristic information of the mobile body (40).

7. The mobile body management device (10, 10B) according to any one of claims 1 to 6, wherein at least one of the first waypoint, the second waypoint, and the third waypoint is a waypoint on which the mobile body (40) performs a predetermined process.

8. The mobile body management device (10, 10B) according to any one of claims 1 to 7, further comprising a reception unit (20B) that receives operation input by a user, wherein
the first setting unit (20C) sets the first waypoint at a position separated by a predetermined distance in a direction away from the surface of the virtual model with reference to a reference point on the surface of the virtual model received by the reception unit (20B).

9. The mobile body management device (10, 10B) according to any one of claims 1 to 8, wherein, when the mobile body (40) makes a one-way patrol inside the facility to be patrolled having a tubular shape from one end side to another end side of the facility to be patrolled in an extension direction, the global patrol route generation unit (20F) sets the one or more third waypoints along a virtual line that passes from the one end side to the other end side of the facility to be patrolled in the extension direction, inside the virtual model of the facility to be patrolled.

10. The mobile body management device (10, 10B) according to any one of claims 1 to 9, wherein, when the mobile body (40) reciprocates inside the facility to be patrolled having a tubular shape between one end side and another end side of the facility to be patrolled in the extension direction,
the global patrol route generation unit (20F) sets one of two virtual lines, which pass through the virtual model of the facility to be patrolled along the extension direction of the facility to be patrolled and have different positions in an intersection direction intersecting in the extension direction, as an outbound route, sets the other of the two virtual lines as a return route, and sets the one or more third waypoints along the outbound route from the one end side to the other end side of the outbound route in the extension direction and along the return route from the other end side to the one end side of the return route in the extension direction.

11. The mobile body management device (10, 10B) according to claim 10, wherein the patrol route generation unit (20G) generates the patrol route in which the local patrol route is inserted into at least one of the global patrol route on the outbound route and the global patrol route on the return route.

12. A mobile body management method comprising:
a virtual model acquisition of acquiring a virtual model of a facility to be patrolled by a mobile body (40);
a first setting of setting first waypoints, which are essential route points of the mobile body (40), in a virtual space where the virtual model is arranged;
a second setting of performing at least one of setting one or more second waypoints around a first waypoint and setting, in the first waypoint, peripheral stay time information representing a peripheral stay time on the first waypoint;
a local patrol route generation of generating, for each of the first waypoints, a local patrol route in which at least one of passing through the first waypoint and the second waypoints around the first waypoint and assigning the peripheral stay time information to the first waypoint has been performed;
a global patrol route generation of setting one or more third waypoints at positions separated by a predetermined distance from a surface of the virtual model and generating a global patrol route that passes through a third waypoint; and
a patrol route generation of generating a patrol route in which the local patrol route is inserted into the global patrol route.

13. A mobile body management computer program product having a computer readable medium including programmed instructions stored therein, wherein the instructions, when executed by a computer, cause the computer to perform:
a virtual model acquisition of acquiring a virtual model of a facility to be patrolled by a mobile body (40);
a first setting of setting first waypoints, which are essential route points of the mobile body (40), in a virtual space where the virtual model is arranged;
a second setting of performing at least one of setting one or more second waypoints around a first waypoint and setting, in the first waypoint, peripheral stay time information representing a peripheral stay time on the first waypoint;
a local patrol route generation of generating, for each of the first waypoints, a local patrol route in which at least one of passing through the first waypoint and the second waypoints around the first waypoint and assigning the peripheral stay time information to the first waypoint has been performed;
a global patrol route generation of setting one or more third waypoints at positions separated by a predetermined distance from a surface of the virtual model and generating a global patrol route that passes through a third waypoint; and
a patrol route generation of generating a patrol route in which the local patrol route is inserted into the global patrol route.

14. The mobile body management computer program product according to claim 13, wherein the instructions cause the computer to further perform an output control of outputting the patrol route.

15. The mobile body management computer program product according to claim 13 or 14, wherein in the second setting,
the second waypoints are set in at least one of within a range of a predetermined distance from the first waypoint in the virtual space and on one or more concentric circles with the first waypoint as a center, and
in the local patrol route generation, the local patrol route that sequentially passes through the first waypoint and each of the second waypoints around the first waypoint one or more times is generated for each of the first waypoints.

16. The mobile body management computer program product according to any one of claims 13 to 15, wherein in the patrol route generation, the patrol route in which the local patrol route is inserted between two of the third waypoints having a minimum distance to the first waypoint included in the local patrol route among the third waypoints included in the global patrol route is generated for each of the local patrol routes.

17. The mobile body management computer program product according to any one of claims 13 to 16, wherein in the global patrol route generation, the global patrol route that passes through the third waypoints one or more times is generated.

18. The mobile body management computer program product according to any one of claims 13 to 17, wherein at least one of a distance between the surface of the virtual model and the first waypoint, a distance between the surface of the virtual model and the second waypoint, and a distance between the surface of the virtual model and the third waypoint is a distance according to mobile body characteristic information of the mobile body (40).

19. The mobile body management computer program product according to any one of claims 13 to 18, wherein at least one of the first waypoint, the second waypoint, and the third waypoint is a waypoint on which the mobile body (40) performs a predetermined process.

20. The mobile body management computer program product according to any one of claims 13 to 19, wherein the instructions cause the computer to further perform a reception of receiving operation input by a user, wherein
in the first setting, the first waypoint is set at a position separated by a predetermined distance in a direction away from the surface of the virtual model with reference to a reference point on the surface of the virtual model received by the reception unit (20B).

21. The mobile body management computer program product according to any one of claims 13 to 20, wherein in the global patrol route generation, when the mobile body (40) makes a one-way patrol inside the facility to be patrolled having a tubular shape from one end side to another end side of the facility to be patrolled in an extension direction,
the one or more third waypoints are set along a virtual line that passes from the one end side to the other end side of the facility to be patrolled in the extension direction, inside the virtual model of the facility to be patrolled.

22. The mobile body management computer program product according to any one of claims 13 to 21, wherein in the global patrol route generation, when the mobile body (40) reciprocates inside the facility to be patrolled having a tubular shape between one end side and another end side of the facility to be patrolled in the extension direction,
one of two virtual lines, which pass through the virtual model of the facility to be patrolled along the extension direction of the facility to be patrolled and have different positions in an intersection direction intersecting the extension direction, is set as an outbound route, the other of the two virtual lines is set as a return route, and the one or more third waypoints are set along the outbound route from the one end side to the other end side of the outbound route in the extension direction and along the return route from the other end side to the one end side of the return route in the extension direction.

23. The mobile body management computer program product according to claim 22, wherein in the patrol route generation, the patrol route in which the local patrol route is inserted into at least one of the global patrol route on the outbound route and the global patrol route on the return route is generated.

24. A mobile body management system comprising:
a mobile body (40);
a virtual model acquisition unit (20A) that acquires a virtual model of a facility to be patrolled by the mobile body (40);
a first setting unit (20C) that sets first waypoints, which are essential route points of the mobile body (40), in a virtual space where the virtual model is arranged;
a second setting unit (20D, 21D) that performs at least one of setting one or more second waypoints around a first waypoint and setting, in the first waypoint, peripheral stay time information representing a peripheral stay time on the first waypoint;
a local patrol route generation unit (20E, 21E) that generates, for each of the first waypoints, a local patrol route in which at least one of passing through the first waypoint and the second waypoints around the first waypoint and assigning the peripheral stay time information to the first waypoint has been performed;
a global patrol route generation unit (20F) that sets one or more third waypoints at positions separated by a predetermined distance from a surface of the virtual model and generates a global patrol route that passes through a third waypoint; and
a patrol route generation unit (20G) that generates a patrol route in which the local patrol route is inserted into the global patrol route.
